# EUROPÄISCHE PATENTSCHRIFT

(11) **EP 1 324 002 B1**
(45) Veröffentlichungstag und Bekanntmachung des Hinweises auf die Patenterteilung: **15.06.2011**
(21) Anmeldenummer: 02028181.2
(22) Anmeldetag: 19.12.2002
(51) Int. Cl.: G01B 7/00, G01B 7/04, F16H 25/20

(54) **Anordnung zum Erfassen der aktuellen Länge eines elektromechanischen Linearantriebs**
Apparatus for measuring the actual length of an electromechanical linear drive
Dispositif pour mesurer la longueur actuelle d'un actionneur linéaire éléctromécanique

(30) Priorität: 28.12.2001 DE 10164580
(43) Veröffentlichungstag der Anmeldung: 02.07.2003
(73) Patentinhaber: ESW GmbH, 22880 Wedel (DE)
(72) Erfinder: Schulz, Georg, 25336 Elmshorn (DE); Schulze, Helmuth, 25436 Uetersen (DE)
(74) Vertreter: Freitag, Joachim

(56) Entgegenhaltungen:
- US-A- 3 173 040
- US-A- 3 660 704
- US-A- 5 086 861
- US-A- 5 514 961
- US-A- 5 634 373
- US-B1- 6 276 066

## Beschreibung

Die Erfindung betrifft einen elektromechanischen Linearantrieb mit einem Linearsensor zum Erfassen der aktuellen Verschiebung der Spindel des elektromechanischen Linearantriebs, insbesondere zur Erfassung der relativen Lage der Spindel eines Spindelgetriebes. Sie findet vorzugsweise Anwendung bei linearen Neigeantrieben für Schienenfahrzeuge zur Kontrolle des aktuellen Stellzustandes.

Im Stand der Technik sind gegenwärtig zwei relativ gleichwertige Konzepte der Erfassung des Stellzustandes von elektromechanischen spindelgetriebenen Linearantrieben, mit denen Wagenkästen von Schienenfahrzeugen um die Längsachse geneigt werden, bekannt.
Zum Einen werden mittels eines im Motor eingebauten Absolutwert-Encoders, der Drehungsinkremente der Motorwelle zählt (Prospekt "Railway Tilting Technology" der Fa. Curtiss Wright Antriebstechnik GmbH, Neuhausen (Schweiz), Januar 2000, S. 11), zur linearen Ortsänderung der Spindelmutter des Linearantriebs äquivalente Einheiten erfasst. Zum Anderen wird von M. Seemann (in: Elektr. Bahnen Ausgabe 9/2000) eine sehr ähnliche Vorgehensweise beschrieben, bei der z.B. ein Resolver mit Messgetriebe am Eingangsritzel des Zwischengetriebes angebracht ist, der die Längenänderung des Linearantriebs ebenfalls indirekt, d.h. drehzahlorientiert in Motornähe, aufnimmt.
Die vorbekannten Lösungen haben den Nachteil, dass die Antriebsbewegung nicht direkt als Lageverschiebung der Spindel erfasst wird, so dass nie die tatsächliche Spindelstellung und somit nicht mit ausreichender Sicherheit der tatsächliche Stellzustand des Linearantriebs, d.h. bei Schienenfahrzeugen die Neigung des Wagenkastens, erfasst wird. Letzteres kann besonders dann kritisch sein, wenn ein so gestalteter Neigungssensor die Neigung als eingestellt angibt, die Neigung aber tatsächlich nicht ausgeführt wurde, weil das Motorritzel oder Teile des Zwischengetriebes zur Spindelmutter in irgendeiner Weise gestört oder beschädigt sind, und damit die Wagenkastenneigung als funktionstüchtig zum schnelleren Durchfahren von kurvenreichen Bahnstrecken genutzt wird, obwohl die fehlende Neigung zu einer Gefährdung der Fahrgäste führt.

Des Weiteren sind im Stand der Technik eine Reihe von Linearaktuatoren bekannt geworden, die bei streng zylindrischer Bauform separate Messmittel zur Aufnahme der linearen Spindelverschiebung aufweisen.

So ist in der US 5 634 373 ein Rotations- in Linearbewegung umsetzender Aktuator offenbart, bei dem Elektromotor, Spindel und Spindelmutter auf derselben Achse eines zylindrischen Gehäuses liegen, wobei die Spindel spielfrei über ein axiales Getriebe und die Spindelmutter linear bewegt wird. Dabei wird die Spindelverschiebung gemessen mittels eines in eine Spindelbohrung eingesetzten Linearsensors, der eine über Rückstellfedern gegen eine Getriebenabe im Gehäuse gedrückte Schubstange aufweist, die ein Potentiometer verstellt. Da sich die Messelemente innerhalb der Spindelbohrung befinden, ist eine seitliche Durchgangsbohrung in der Spindel außerhalb des Gehäuses vorhanden, die Kabelbeschädigungen und Messstörungen begünstigt.

Nachteilig an dieser Gestaltung ist vor allem, dass der Sensor nicht kontaktlos arbeitet und mehrere mechanisch bewegte Teile (Schubstange, Rückstellfedern und Kabeldurchführung) aufweist, so dass der Sensor sehr verschleiß- und störanfällig ist.

Des Weiteren ist in der US 5 086 861 ein Linearantrieb für die Steuerung von Fahrzeughinterrädern beschrieben. Bei diesem Aktuator, der ebenfalls Elektromotor und Spindelgetriebe auf derselben Achse aufweist, wird die Messung der Spindelverschiebung über eine separate seitlich von der Spindelmutter mitgeführte Getriebestange mittels Hall-Sensoren durchgeführt. Damit ist eine direkte Messung der Spindelbewegung ausgeschlossen und mögliche Störungen des Spindelgetriebes (Lose oder Bruch) werden nicht erfasst. Es sind aufgrund der konstruktiven Anlage von Spindel und separatem Sensoraufbau nur kurze Stellwege realisierbar und messbar.

Der Erfindung liegt die Aufgabe zugrunde, eine neuartige Möglichkeit zum Erfassen der aktuellen Länge eines elektromechanischen Linearantriebs zu finden, die zuverlässig die tatsächliche Längenänderung des Linearantriebs erfasst, ohne dass die Steuerung und Regelung des Linearantriebs für kleine Änderungen des Zustandes unempfindlicher wird.

Erfindungsgemäß wird die Aufgabe bei einem elektromechanischen Linearantrieb zur Umsetzung einer Rotationsbewegung in eine Linearbewegung, der eine linear bewegliche Spindel und eine abgestützte, zahnradgetriebene Spindelmutter zur linearen Verschiebung der Spindel enthält und einen Linearsensor zur Erzeugung einer der Spindelverschiebung proportionalen Messgröße aufweist, dadurch gelöst, dass der Linearsensor axial entlang der Spindelachse gehäusefest innerhalb eines Spindelgehäuses des Linearantnebs angebracht ist, wobei der Linearsensor zum Abtasten eines lastfreien Endes der Spindel einen Messstab mit ortsabhängig entlang der Spindelachse kontaktlos abtastenden Messmitteln aufweist, der am Ende eines Spindelgehäuses, an dem eine dem beweglichen lasttragenden Ende der Spindel gegenüber liegende ortsfeste Abstützung des Spindelgehäuses vorhanden ist, starr befestigt ist, so dass eine längenäquivalente Messgröße für die Lage des lastfreien Endes der Spindel gegenüber dem gehäusefesten Messstab erfassbar ist.

Vorteilhaft sind am lastfreien Ende der Spindel ein Stellungsgeber und in der Spindel vom lastfreien Ende in Richtung der Spindelmutter eine zentrale Bohrung, deren Tiefe mindestens der maximalen Hublänge des Linearantriebs entspricht, zum Eintauchen des Messstabes vorhanden, so dass der Linearsensor infolge der unterschiedlichen Einschublänge des Messstabes in die Bohrung ein längenäquivalentes Signal abgibt.

Für zwei vorteilhafte Ausgestaltungsvarianten ist der Stellungsgeber zweckmäßig ein permanentmagnetischer Ring, der in magnetische Wechselwirkung mit magnetischen Elementen des Messstabes tritt.

In einer ersten Variante weist der Messstab innerhalb eines nichtmagnetisierbaren Führungsrohres eine regelmäßige Aneinanderreihung von Magnetfeldsensoren (z.B. Hall-Sensoren) auf, wobei aus Änderungen des elektrischen Widerstandes von in der Nähe des Stellungsgebers liegenden Magnetfeldsensoren die absolute Position der Spindel bestimmbar ist.

In einer zweiten Variante wird der Messstab durch ein nichtmagnetisierbares Führungsrohr und einen darin axial gespannten Draht aus magnetostriktivem Material gebildet, wobei durch Stromimpulse im Draht zyklisch ein zum permanentmagnetischen Stellungsgeber verschiedenes Magnetfeld vorhanden ist, das durch Magnetostriktion im Draht Schallwellen auslöst, und im Wege einer Laufzeitmessung der Schallwellen die absolute Position der Spindel bestimmbar ist. Das Führungsrohr besteht zweckmäßig aus einem beliebigen abriebfesten Material, vorzugsweise aus Aluminium oder V2A-Stahl.

In einer weiteren Variante des Linearsensors ist der Stellungsgeber eine Koppelelektrode, die zur kapazitiven Kopplung mit Leiterbahnen des Messstabes vorgesehen ist. Dabei weist der Messstab in einem nichtmetallischen Führungsrohr eine Widerstandsbahn und eine Kollektorbahn auf, wobei die Koppelelektrode als Stellungsgeber kapazitiv zur Erzeugung eines Verschiebestromes von der Widerstandsbahn auf die Kollektorbahn vorgesehen ist, mit dem infolge seiner Ortsabhängigkeit die absolute Position der Spindel bestimmbar ist.

Der Linearsensor kann - unabhängig von seiner konkreten Ausführungsform - in Verlängerung der Spindelachse entweder direkt im Spindelgehäuse vor dem Gelenkkopf des Linearantriebs integriert sein oder er ist, soweit es die Anbringung von Gelenkkopf oder Anschlusszapfen am ortsfesten Teil des Linearantriebs zulässt, von außen an einer freien Stirnseite des Spindelgehäuses entlang der Spindelachse eingesetzt, d.h. besser zugänglich und einfacher austauschbar.

Die Erfindung basiert auf der Grundüberlegung, dass die Aufnahme von Drehzahlinkrementen des Antriebsmotors als Maß für die Ausfahrlänge eines Linearantriebs mit Spindelgetriebe zwar beliebig genau eingestellt werden kann, aber bei einem Verlust der Nulleinstellung (z.B. bei Spannungsunterbrechung oder Neustart) eine absolute Messung unmöglich ist. Weiterhin bergen bei einem zwingend vorhandenen Zwischengetriebe jegliche Störungen (Lose oder Bruch) Risiken in der Gewährleistung von Genauigkeit und Zuverlässigkeit des Messergebnisses.

Mit der Erfindung wird ohne gravierende Nachteile bezüglich Genauigkeit und Raumbedarf beim Linearantrieb die Messung direkt an der linear bewegten Spindel erreicht, indem an deren lastfreien Ende ein Stellungsgeber angebracht ist, der in die Spindel eintauchende, stabförmig ausgeführte Messmittel kontaktlos lokal beeinflusst, so dass über die Messmittel ein Absolutwert der relativen Lage zwischen lastfreiem Spindelende und gehäusefesten Messmitteln vollzogen werden kann. Die Messprinzipien sind dabei vielfältig, wobei der Stellungsgeber durch eine magnetische oder kapazitive Feldeinkopplung den Ort des Stellungsgebers in Längsrichtung des Messstabes beeinflusst (markiert). Der so beeinflusste Ort des Messstabes kann dann über Laufzeitmessungen von Schallwellen, Widerstandsbrücken etc. in ortsabhängige elektrische Signale gewandelt und nachfolgend als absolute Weglänge ausgewertet werden, die auch bei unterbrochener Messung sofort wieder die tatsächliche Stellung des Linearantriebs (Spindellage) liefert.

Die Anordnung gemäß der Erfindung gestattet es, den aktuellen Stellzustand, d.h. die tatsächliche Ausfahrlänge, eines elektromechanischen Linearantriebs als Absolutgröße zuverlässig zu messen, ohne dass die Steuerung und Regelung des Linearantriebs für kleine Änderungen des Zustandes unempfindlicher wird. Die Erfindung genügt weiterhin Volumenbeschränkungen des Linearantriebs und lässt außerdem unter Beibehaltung der herkömmlichen Sensortechniken eine Überwachung der Funktionsfähigkeit der Getriebekomponenten zu.

Die Erfindung soll nachstehend anhand von Ausführungsbeispielen näher erläutert werden. Die Zeichnungen zeigen:
Fig. 1: eine Darstellung des erfindungsgemäßen Linearantriebs mit Linearsensor,
Fig. 2: eine Gestaltungsvariante des Linearsensors mit magnetoresistivem Prinzip,
Fig. 3: eine Ausführungsform des Linearsensors mit magnetostriktivem Prinzip, wobei der Linearsensor von außen einfach austauschbar eingebracht ist,
Fig. 4: eine Ausgestaltung des Linearsensors unter Nutzung eines kapazitiven Potentiometerprinzips,
Fig. 5: eine Gestaltung des Linearsensors mit induktivem Prinzip.

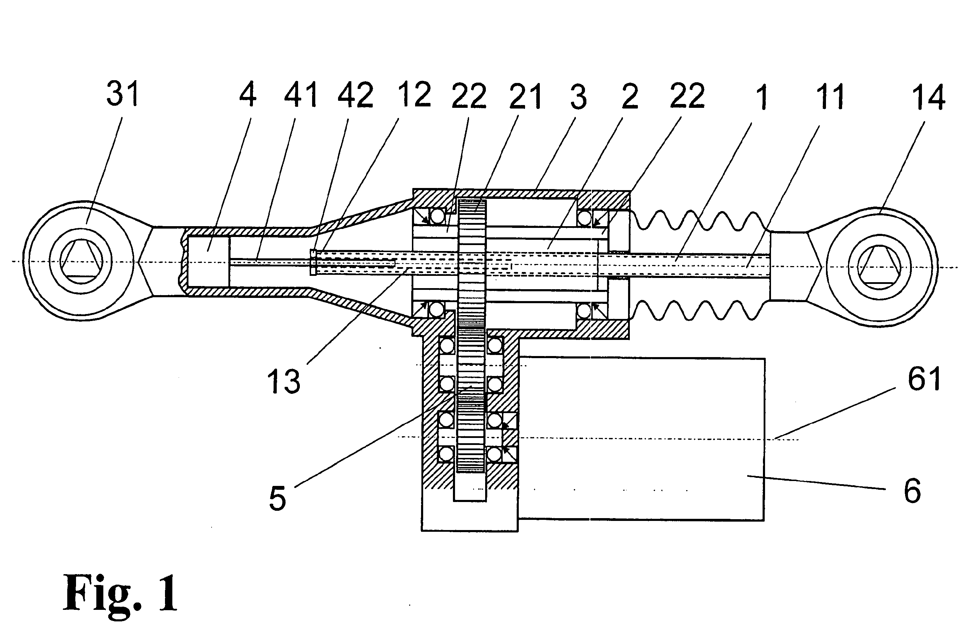

Die erfindungsgemäße Anordnung besteht - wie bei dem in Fig. 1 dargestellten elektromechanischen Linearantrieb - aus einer Spindel 1 mit Spindelmutter 2, einem die Spindel 1 umgebenden Gehäuse 3 und einem Linearsensor 4, der einen in Richtung der Spindelachse 11 ausgerichteten Messstab 41 sowie einen an der Spindel 1 befestigten Stellungsgeber 42 beinhaltet.
Die auf der Spindel 1 sitzende Spindelmutter 2, die zur Erreichung großer Stellkräfte und spielarmer Funktionsweise vorzugsweise als Planetenrollengetriebe ausgeführt ist, wird lasttragend in einer Rotorwelle 22 geführt. Die Rotorwelle 22 vereinigt die Spindelmutter 2 mit einer Außenverzahnung 21, die über ein Zwischengetriebe 5 mit der Antriebswelle 61 des Motors 6 in Verbindung steht. Über diese Außenverzahnung 21 wird mit Hilfe des Zwischengetriebes 5 das Drehmoment des Motors 6 auf die Spindelmutter 2 übertragen. Der Linearantrieb setzt somit die Drehbewegung der Antriebswelle 61 des Motors 6 über eine Rotation der mit der Rotorwelle 22 gedrehten Spindelmutter 2 in eine lineare Bewegung der Spindel 1 um. Dadurch ändert der Linearantrieb seine Länge, indem die Spindel 1 gegenüber dem Gehäuse 3 aus- oder eingefahren wird. Der Ein- und Ausfahrzustand äußert sich in einer maximalen Abstandsänderung zwischen einem starr am Gehäuse 3 befestigten Gelenkkopf 31 und einem linear gegenüber dem Gehäuse 3 bewegten Gelenk 14 am lasttragenden Ende 15 der Spindel 1.

Der in Fig. 1 und nachfolgenden Figuren dargestellte Linearantrieb ist - ohne Beschränkung der Allgemeinheit - für Schienenfahrzeuge mit aktiver Neigetechnik konzipiert. Dabei wird durch Drehen der Antriebswelle 61 des Motors 6 die Spindelmutter 2 in Rotationsbewegung versetzt und die Spindel 1 linear verschoben, um einen Wagenkasten um dessen Längsachse gegenüber dem Drehgestell des Schienenfahrzeugs zu drehen, d.h. den Wagenkasten zu neigen. Dabei stützt sich der Linearantrieb mit seinem Gelenkkopf 31 am Drehgestell und mit der Spindel 1 über deren Gelenk 14 an dem in einer Wiege aufgehängten Wagenkasten ab, so dass eine Längenänderung des Linearantriebs die Neigebewegung des Wagenkastens bewirkt. Insbesondere bei diesem Einsatzgebiet ist eine sehr genaue Steuerung, Regelung und Überwachung der Ausfahrlänge des Linearantriebs vonnöten, um bei Kurvenfahrten Zuggeschwindigkeit und Wagenkastenneigung aufeinander abzustimmen.

Um eine ständige, direkte absolute Erfassung der Position der Spindel 1 des Linearantriebs zu gewährleisten, ist der Linearsensor 4 direkt auf der Achse 11 der Spindel 1 angeordnet und mit seinen wesentlichen Teilen, der Messelektronik und dem Messstab 41, mit dem die Spindel 1 umgebenden Gehäuse 3 starr verbunden. Die Messung der Position der Spindel 1 erfolgt dabei so, dass an einem lastfreien Ende 12 der Spindel 1 der Stellungsgeber 42 des Linearsensors 4 befestigt ist, der kontaktlos im Messstab 41 vorhandene ortsabhängige Messmittel ortsabhängig beeinflusst, wobei der Messstab 41 parallel zur Spindelachse 11 ausgerichtet ist.
Die vorteilhafteste Bauform ist dabei die in Fig. 1 dargestellte konzentrische Lage von Messstab 41 und Spindel 1. Diese wird dadurch realisiert, dass in das lastfreie Ende 12 der Spindel 1 eine Bohrung 13 zur Aufnahme des Messstabes 41 eingebracht ist, in die der Messstab 41 entsprechend der axialen Verschiebung der Spindel 1 entlang der Spindelachse 11 eintaucht. Die Tiefe der Bohrung 13 und die Länge des Messstabes 41 sind dabei so ausgelegt und aufeinander abgestimmt, dass einerseits bei maximal eingefahrener Spindel 1 der Messstab 41 ohne Behinderung in die Bohrung 13 eintauchen kann und andererseits bei maximal ausgefahrener Spindel 1 der Messstab 41 noch ausreichend mit dem Stellungsgeber 42 in Wechselwirkung steht.

Das vom Linearsensor 4 in Abhängigkeit von der aktuellen Position der Spindel 1 (d.h. in Abhängigkeit von der vorhandenen Eintauchtiefe des Messstabes 41 in die Bohrung 13) ausgegebene Signal kann als Istwert für die Lageregelung des Linearantriebs, zur Überwachung des Stellzustandes (z.B. der Wagenkastenneigung) und zur Diagnose von Fehlern im Zwischengetriebe 5 oder an der Spindelmutter 2 verwendet werden.
Mit Hilfe eines inkrementalen Messwertaufnehmers im oder am Motor 6 - wie als bisheriger Stand der Technik oben beschrieben - ist ständig ein Vergleich der Stellungsmesswerte des Motors 6 und der Spindel 1 gegenüber dem Linearsensor 4 durchführbar, so dass auf diese Weise zusätzlich Veränderungen der Getriebelose im Zwischengetriebe 5 und in der Spindelmutter 2 festgestellt oder auch Zahnrad- und Wellenbrüche zwischen Motor 6 und Spindel 1 zuverlässig ("on line") erkannt werden können. Ein sogenannter Resolver arbeitet, bezogen auf die Motorwelle 61, über 360° absolut. In Bezug auf die Spindel 1 wird er mittels einer geeigneten Software inkremental als Vielfachdrehungsgeber (multi-turn control) genutzt.

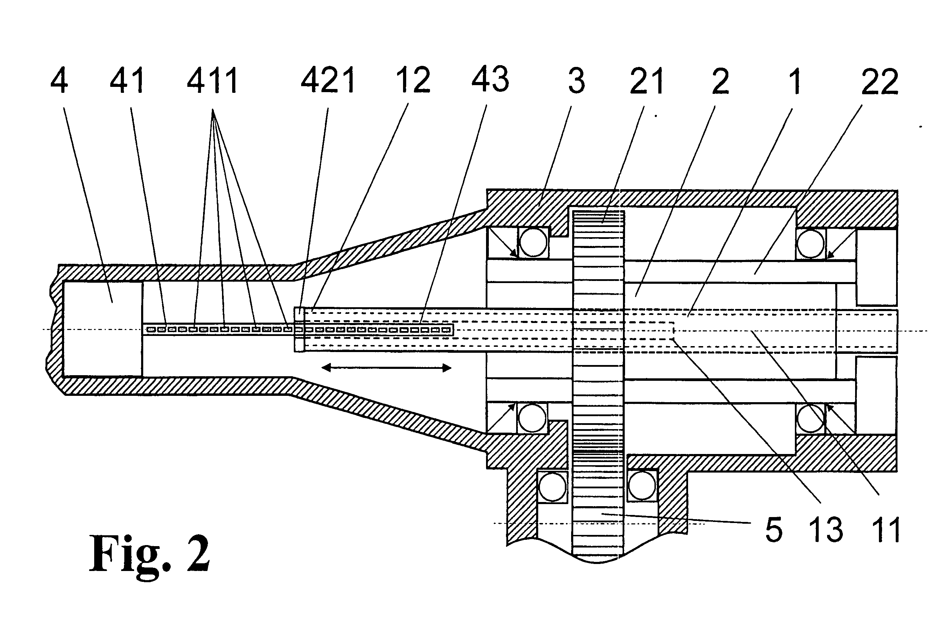

In einer ersten Ausführungsform zeigt Fig. 2 einen Linearantrieb, bei dem der Linearsensor 4 im Innenraum des Gehäuses 3 installiert ist. Diese Einbauform bietet sich immer dann an, wenn am Gehäuse 3 in der Verlängerung der Spindelachse 11 ein Gelenkkopf 31 (als Gegenstück des zweiten an der Spindel 1 befindlichen Gelenks 14) angebracht ist.

Der Linearsensor 4 kann zur Erfüllung der Messaufgabe in unterschiedlichster Weise aufgebaut sein, indem im Messstab 41 verschiedene linear ortsabhängige Messmittel und am lastfreien Ende 12 der Spindel 1 geeignete Stellungsgeber 42 vorgesehen sind. Dazu sind in den Figuren 2 bis 5 Ausgestaltungen des Linearsensors 4 auf Basis unterschiedlicher Messprinzipien offenbart, die in ihrer Funktionsweise an sich bekannt sind und deshalb nur vom Standpunkt des messwirksamen Einbaus her nachfolgend näher beschrieben werden.

### Magnetoresistiver Linearsensor

Die in Fig. 2 gezeigte Art des Linearsensors 4 basiert auf einem magnetoresistiven Prinzip. Der Linearsensor 4 arbeitet dabei nach dem Prinzip der Magnetwiderstandseffekte in magnetischen Werkstoffen. Der Stellungsgeber 42 ist in diesem Beispiel ein permanentmagnetischer Ring 421. Der Messstab 41 weist in einem nichtmagnetisierbaren Führungsrohr 43 eine regelmäßige Aneinanderreihung von Magnetfeldsensoren 411 auf, wobei aus Änderungen des elektrischen Widerstandes von in der Nähe des Stellungsgebers 42 liegenden Magnetfeldsensoren die absolute Position der Spindel 1 bestimmbar ist. Das Führungsrohr 43 besteht aus einem nicht magnetischen Material, z.B. aus Aluminium oder aus V2A-Stahl, und taucht in die im lastfreien Ende 12 der Spindel 1 eingebrachte Bohrung 13 ein.
Das vom magnetischen Ring 421 ausgehende Magnetfeld wirkt auf die linear im Messstab 41 des Linearsensors 4 angeordnete Reihe von Magnetfeldsensoren 411 und führt bei den in der Nähe des magnetischen Ringes 421 liegenden Magnetfeldsensoren 411 zur Änderung des elektrischen Widerstandes durch eine Ablenkung von Ladungsträgern. Aus diesem Effekt (Hall-Effekt) ist die Position des als Stellungsgeber 42 eingesetzten permanentmagnetischen Ringes 421 und somit der Spindel 1 gegenüber dem gehäusefesten Messstab 41 des Linearsensors 4 bestimmbar. Auch im spannungslosen Zustand kann die Spindel 1 mechanisch verfahren werden und nach dem Wiedereinschalten der Versorgungsspannung steht die aktuelle Position der Spindel 1 ohne weitere Vergleichs- oder Kalibrierungsmessung wieder als absoluter Messwert zur Verfügung.

### Magnetostriktiver Linearsensor

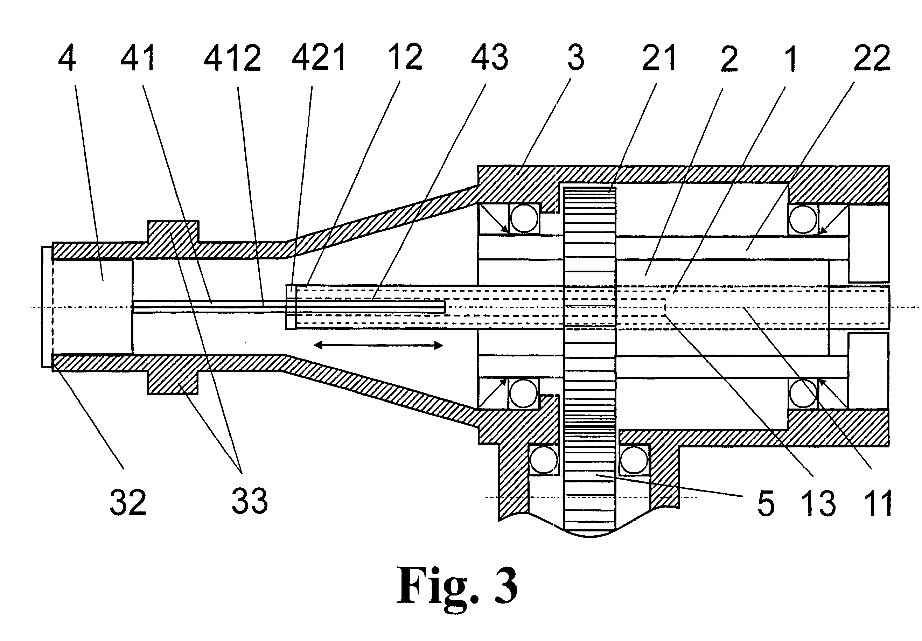

Eine Realisierung des Linearantriebs mit einem magnetostriktiven Sensorprinzip ist in Fig. 3 dargestellt. Der Linearsensor 4 arbeitet magnetostriktiv nach dem Prinzip einer Laufzeitmessung (Ultraschall) zwischen zwei Punkten eines magnetostriktiven Wellenleiters. Die Ultraschall-Laufzeit ist wegproportional.
Wie im ersten Beispiel ist die linear bewegte Spindel 1 mit einer (dem Hub des Linearantriebs entsprechenden) zentrischen Bohrung 13 versehen. Am lastfreien Ende 12 der Spindel 1 (und damit am Beginn der Bohrung 13) ist wiederum ein Stellungsgeber 42 in Form eines permanentmagnetischen Ringes 421 installiert. Der Linearsensor 4 mit dem Messstab 41 ist entlang der Spindelachse 11 gehäusefest im Gehäuse 3 der Spindel 1 montiert. Somit ragt der Messstab 41 des Linearsensors 4 mit seinem, wie bereits im vorhergehenden Beispiel beschriebenen Führungsrohr 43 mit einer dem Hub des Linearantriebs angepassten Länge in die Bohrung 13 hinein. Innerhalb des Führungsrohres 43 ist in dieser Ausführungsvariante des Linearsensors 4 axial ein magnetostriktiver Draht 412 gespannt, durch den hochfrequente Stromimpulse gesandt werden.
Durch den als Stellungsgeber 42 eingesetzten magnetischen Ring 421 stehen sich in dem vom Ring 421 beeinflussten Bereich des magnetostriktiven Drahtes 412 bei jedem Stromimpuls zwei verschieden ausgerichtete Magnetfelder gegenüber und erzeugen eine Magnetostriktion im Draht 412. Die dabei entstehenden Ultraschallsignale breiten sich vom Messort in beide Richtungen aus. Über einen akustischen Messwertaufnehmer im Linearsensor 4 wird das Ultraschallsignal erfasst und in einen elektrischen Impuls umgewandelt. Die Zeitdifferenz vom Aussenden des Stromimpulses bis zum Eintreffen des Torsionsimpulses setzt der Linearsensor 4 in eine Weginformation um und stellt diese als absoluten Messwert zur Verfügung. Auch in diesem Fall kann die Spindel 1 im spannungslosen Zustand mechanisch verfahren werden und nach dem Wiedereinschalten der Versorgungsspannung liegt ohne Neukalibrierung erneut ein Absolutwert für die aktuelle Position der Spindel 1 vor.

Zur direkten Erfassung der absoluten Position der Spindel 1 des Linearantriebes ist in Fig. 3 insbesondere für Neigetechnik an Schienenfahrzeugen eine von den vorhergehenden Figuren abweichende, wesentlich servicefreundlichere Variante der Einbringung des Linearsensors 4 in den Linearantrieb dargestellt. In dieser Ausführungsvariante gemäß Fig. 3 ermöglicht eine freie Stirnseite 32 des Gehäuses 3 den Einbau (und das Austauschen) des Linearsensors 4 von außen. Voraussetzung ist dafür, dass zur Abstützung des Gehäuses 3 als Gegenstück zum lasttragenden Ende der Spindel 1 gegenüberliegende seitliche Zapfen 33 am Gehäuse 3 zur Aufnahme in einem Schwenklager (nicht dargestellt) vorgesehen sind, so dass der in den zuvor beschriebenen Figuren gezeigte Gelenkkopf 31 in dieser Form entfällt. Mit dieser Vorgabe ist die Gestaltung des leicht austauschbaren Linearsensors 4 auch für alle in den vorhergehend beschriebenen und nachfolgenden Beispielen unabhängig von der Art des angewandten Linearsensorprinzips einsetzbar.

### PSP-Linearsensor

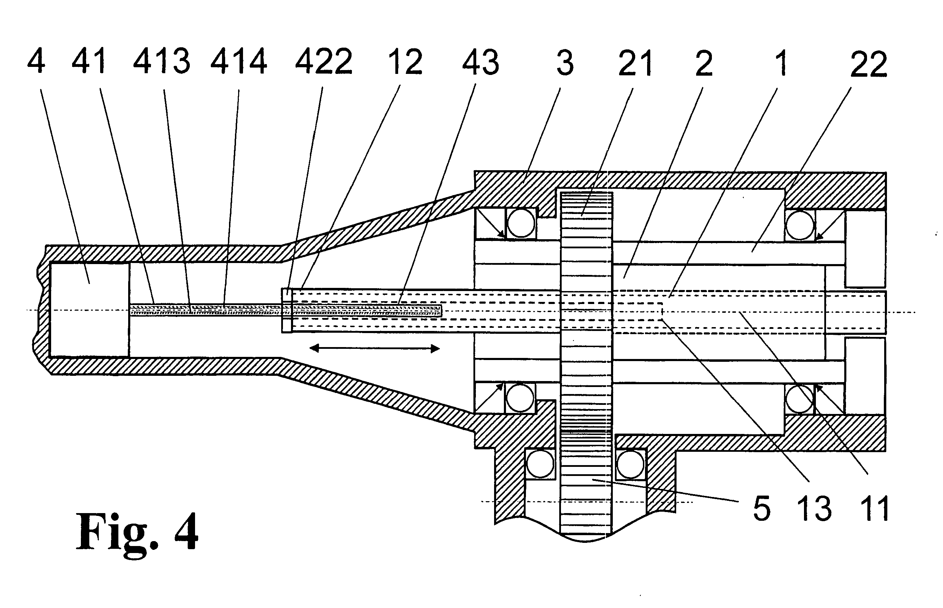

Fig. 4 zeigt ferner ein drittes Ausführungsbeispiel der Erfindung, bei dem der Linearsensor 4 nach dem Prinzip eines Potentialsonden-Potentiometers (PSP) aufgebaut ist. Das Funktionsprinzip ist das eines Potentiometers, bei dem ein Verschiebestrom kapazitiv, also berührungslos, von einer üblichen Widerstandsbahn ausgekoppelt wird.
Der Messstab 41 ist in Durchmesser und Länge entsprechend der Bohrung 13 der Spindel 1 (wiederum in Anpassung an den Hub des Linearantriebs) wie in den vorangegangenen Beispielen ausgelegt.
Der Stellungsgeber 42 ist in diesem Fall eine kapazitive Koppelelektrode 422 in Form mindestens eines Sektors eines Kreisringes, der so groß ist, dass er eine im Innern des Kreisringes entlang der Spindelachse 11 durchgeführte Widerstandsbahn 413 und eine zu letzterer parallele Kollektorbahn 414 überspannt. Hochohmige Widerstandsbahn 413 und niederohmige Kollektorbahn 414 sind im Messstab 41 integriert, befinden sich in (oder - oberflächlich abgesenkt - auf) dem Führungsrohr 43 des Messstabes 41 und ragen in die Bohrung 13 der Spindel 1, wobei die Koppelelektrode 422 am lastfreien Ende 12 der Spindel 1 beide Bahnen 413 und 414 überspannt und für eine ortsabhängige Kopplung zwischen Widerstandsbahn 413 und Kollektorbahn 414 sorgt. Dabei wird mittels der Koppelelektrode 422 kapazitiv berührungslos ein Verschiebestrom von der Widerstandsbahn 413 auf die Kollektorbahn 414 übertragen. Wird eine Wechselspannung als Potentiometerspannung entsprechend gesteuert (z.B. durch eine sogenannte Summenregelung), so ist der Verschiebestrom eine hinreichend lineare Funktion der Lage der Koppelelektrode 422 und somit der Spindel 1 gegenüber dem Messstab 41. Eine mechanische Verschiebung der Spindel 1 im spannungslosen Zustand des Linearsensors 4 führt somit nach jedem Wiedereinschalten der Versorgungsspannung stets erneut zu einer absoluten Positionsangabe der Spindel 1.

### Induktiver Linearsensor

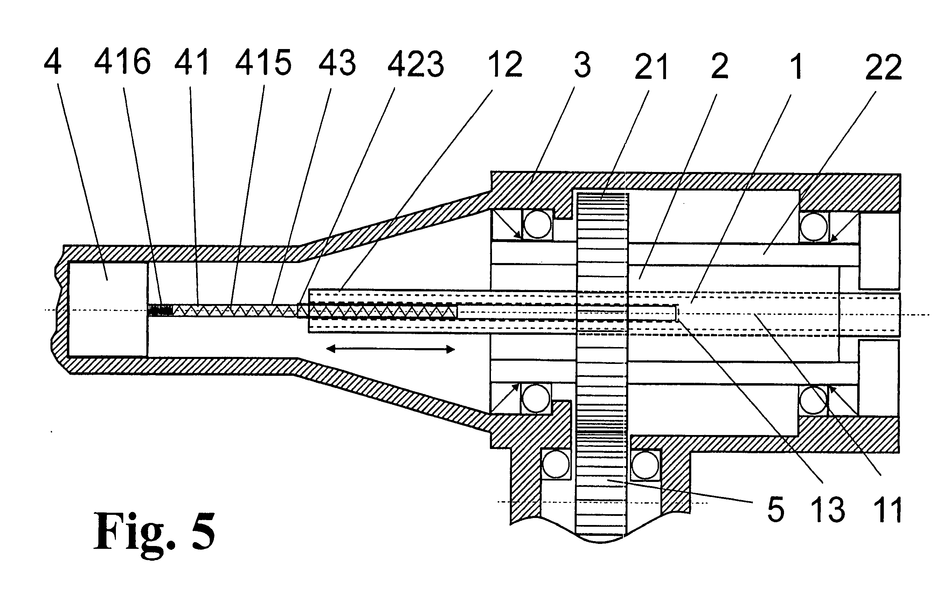

Der Linearsensor 4 gemäß Fig. 5 arbeitet nach dem berührungslosen induktiven Prinzip. Die Messanordnung besteht aus einer induktiven Halbbrücke, welche mit zwei Kondensatoren zu einer Vollbrücke (nicht dargestellt) ergänzt wird. Die beiden Induktivitäten, die im Messstab 41 des Linearsensors 4 angeordnet sind, sind völlig unterschiedlich aufgebaut. Die erste Induktivität besteht als Messspule 415 aus wenigen weitläufigen Windungen und füllt den weitaus größten Teil des Messstabes 41 aus, der für das Eintauchen in die Spindel 1 vorgesehen ist. Die zweite Induktivität, eine Referenzspule 416, liegt eng gewickelt auf dem restlichen Teil des Messstabes 41, der nie in die Spindel 1 eintaucht.
Die Spindel 1 ist - wie in den vorher beschriebenen Beispielen - mit einer dem maximalen Hub des Linearantriebs entsprechenden zentrischen Bohrung 13 versehen. In der Bohrung 13 ist die aus nichtmagnetischem Metall bestehende Hülse 423 als Stellungsgeber 42 befestigt.
Wenn nun über die Messspule 415 die mit der Spindel 1 verbundene bewegliche Hülse 423 aus nichtmagnetischem Material verfährt, so wird in Abhängigkeit von der wirksamen Eintauchlänge der Messspule 415 in die Hülse 423 die Brückenschaltung verstimmt. Das Brückensignal ist dabei proportional zu der durch die Hülse 423 erreichten Abdeckung der Messspule 415 und damit proportional zur Position der Spindel 1 relativ zum Messstab 41 des Linearsensors 4 .
Aus diesem kontaktlosen induktiven Effekt ist eine absolute Positionsbestimmung des Stellungsgebers 42 und somit der Spindel 1 möglich, die auch bei Spindelbewegungen im spannungslosen Zustand nach dem Wiedereinschalten der Versorgungsspannung zuverlässig die aktuelle Position der Spindel 1 bereitstellt.

Es sind weitere Gestaltungsvarianten der Erfindung möglich, ohne den Rahmen dieser Erfindung zu verlassen. Ausgegangen wurde in den vorhergehend beschriebenen Beispielen von kontaktlosen Linearsensoren, die einen in die Spindel 1 des Linearantriebs eintauchenden Messstab 41 und einen Stellungsgeber 42 am lastfreien Ende 12 der Spindel 1 beinhalten. Dabei sind aber auch Prinzipien mit in einen Messzylinder eintauchender Spindel oder mit einem Vorbeibewegen des lastfreien. Endes 12 entlang eines Messstabes 41 nicht erfindungsfremd. Es sind insbesondere auch beliebige kontaktfreie Sensorprinzipien, die nicht ausdrücklich erwähnt sind, gleichfalls klar innerhalb des erfindungsgemäßen Lehre zu verstehen, solange sich diese ohne erfinderisches Zutun in einen im Wesentlichen linear ausgedehnten Messstab integrieren lassen.

Liste der verwendeten Bezugszeichen
- 1: Spindel
- 11: Spindelachse
- 12: lastfreies Ende
- 13: Bohrung
- 14: Gelenk

- 2: Spindelmutter
- 21: Außenverzahnung
- 22: Rotorwelle

- 3: (Spindel-)Gehäuse
- 31: Gelenkkopf
- 32: freie Stirnseite
- 33: Zapfen

- 4: Linearsensor
- 41: Messstab
- 411: Magnetfeldsensoren
- 412: Draht
- 413: Widerstandsbahn
- 414: Kollektorbahn
- 415: Messspule
- 416: Referenzspule
- 42: Stellungsgeber
- 421: (permanent-) magnetischer Ring
- 422: Koppelelektrode
- 423: Hülse
- 43.: Führungsrohr

- 5: Zwischengetriebe

- 6: Motor
- 61: Antriebswelle

## Patentansprüche

1. Elektromechanischer Linearantrieb zur Umsetzung einer Rotationsbewegung in eine Linearbewegung, der eine linear bewegliche Spindel (1) und eine abgestützte, zahnradgetriebene Spindelmutter (2) zur linearen Verschiebung der Spindel enthält und einen Linearsensor (4) zur Erzeugung einer der Spindelverschiebung proportionalen Messgröße aufweist, **dadurch gekennzeichnet, dass** der Linearsensor (4) axial entlang der Spindelachse (11) gehäusefest innerhalb eines Spindelgehäuses (3) des Linearantriebs angebracht ist, wobei der Linearsensor (4) einen Messstab (41) mit ortsabhängig entlang der Spindelachse (11) kontaktlos abtastenden Messmitteln (411, 412, 413, 414, 415, 416) zum Abtasten eines lastfreien Endes (12) der Spindel (1) aufweist, der am Ende des Spindelgehäuses (3), an dem eine dem beweglichen lasttragenden Ende (14) der Spindel (1) gegenüber liegende ortsfeste Abstützung (31; 33) des Spindelgehäuses (3) vorhanden ist, starr befestigt ist, so dass eine längenäquivalente Messgröße für die Lage des lastfreien Endes (12) der Spindel (1) gegenüber dem gehäusefesten Messstab (41) erfassbar ist.

2. Elektromechanischer Linearantrieb nach Anspruch 1, **dadurch gekennzeichnet, dass**
- am lastfreien Ende (12) der Spindel (1) ein Stellungsgeber (42) angebracht ist und
- in der Spindel (1) vom lastfreien Ende (12) in Richtung der Spindelmutter (2) eine zentrale Bohrung (13), deren Tiefe mindestens der maximalen Hublänge des Linearantriebs entspricht, zum Eintauchen des Messstabes (41) vorhanden ist, so dass der Linearsensor (4) ein längenäquivalentes Signal infolge der unterschiedlichen Einschublänge des Messstabes (41) in die Bohrung (13) abgibt.

3. Elektromechanischer Linearantrieb nach Anspruch 2, **dadurch gekennzeichnet, dass** der Stellungsgeber (42) ein permanentmagnetischer Ring (421) ist.

4. Elektromechanischer Linearantrieb nach Anspruch 3, **dadurch gekennzeichnet, dass** der Messstab (41) in einem nichtmagnetisierbaren Führungsrohr (43) eine regelmäßige Aneinanderreihung von Magnetfeldsensoren (411) aufweist, wobei aus Änderungen des elektrischen Widerstandes von in der Nähe des Stellungsgebers (42) liegenden Magnetfeldsensoren (411) die absolute Position der Spindel (1) bestimmbar ist.

5. Elektromechanischer Linearantrieb nach Anspruch 3, **dadurch gekennzeichnet, dass** der Messstab (41) ein nicht magnetisierbares Führungsrohr (43) und einen darin axial gespannten Draht (412) aus magnetostriktivem Material aufweist, wobei durch Stromimpulse im Draht (412) zyklisch ein zum permanentmagnetischen Ring (421) verschiedenes Magnetfeld vorhanden ist, das durch Magnetostriktion im Draht (411) Schallwellen auslöst, und im Wege einer Laufzeitmessung der Schallwellen die absolute Position der Spindel (1) bestimmbar ist.

6. Elektromechanischer Linearantrieb nach Anspruch 4 oder 5, **dadurch gekennzeichnet, dass** das Führungsrohr (43) aus Aluminium besteht.

7. Elektromechanischer Linearantrieb nach Anspruch 4 oder 5, **dadurch gekennzeichnet, dass** das Führungsrohr (43) aus V2A-Stahl besteht.

8. Elektromechanischer Linearantrieb nach Anspruch 2, **dadurch gekennzeichnet, dass** das der Stellungsgeber (42) eine kapazitive Koppelelektrode (422) in Form von mindestens einem Sektor eines Kreisringes ist.

9. Elektromechanischer Linearantrieb nach Anspruch 8, **dadurch gekennzeichnet, dass** der Messstab (41) in einem nichtmetallischen Führungsrohr (43) eine Widerstandsbahn (413) und eine Kollektorbahn (414) aufweist, wobei die Koppelelektrode (422) zur kapazitiven Erzeugung eines Stromes von der Widerstandsbahn (413) auf die Kollektorbahn (414) vorgesehen ist, mit dem infolge seiner Ortsabhängigkeit die absolute Position der Spindel (1) bestimmbar ist.

10. Elektromechanischer Linearantrieb nach Anspruch 2, **dadurch gekennzeichnet, dass** der Stellungsgeber (42) eine in der Bohrung (13) des lastfreien Endes (12) der Spindel (1) eingebrachte metallische, nichtmagnetische Hülse (423) mit einer Länge des maximalen Verschiebeweges der Spindel (1) ist.

11. Elektromechanischer Linearantrieb nach Anspruch 10, **dadurch gekennzeichnet, dass** der Messstab (41) eine zweiteilige Spule enthält, wobei ein erster Teil der Spule (415) in die metallische Hülse (423) eintaucht sowie ein zweiter Teil (416) stets außerhalb der Hülse (423) als Referenz vorhanden ist und die gesamte Spule (415; 416) Teil einer durch zwei Kapazitäten ergänzten Brückenschaltung ist, deren Brückensignal von der Eintauchtiefe des ersten Teils der Spule (415) in die Hülse (423) abhängt.

12. Elektromechanischer Linearantrieb nach Anspruch 1, **dadurch gekennzeichnet, dass** der Messstab (41) des Linearsensors (4) an der Seite der ortsfesten Abstützung des Spindelgehäuses (3) vor einem Gelenkkopf (31) im Spindelgehäuse (3) integriert ist.

13. Elektromechanischer Linearantrieb nach Anspruch 1, **dadurch gekennzeichnet, dass** der Messstab (41) des Linearsensors (4) an der Seite der ortsfesten Abstützung (33) des Spindelgehäuses (3) durch eine Öffnung an einer freien Stirnseite (32) des Spindelgehäuses (3) von außen einschiebbar im Spindelgehäuse (3) befestigt und nachträglich austauschbar ist.

## Claims

1. An electromechanical linear drive for converting a rotational movement into a linear movement, comprising a linearly movable spindle (1) and a supported, gearwheel-driven spindle nut (2) for linear displacement of the spindle as well as a linear sensor (4) for generating a measured value that is proportional to the displacement of the spindle, **characterised in that** the linear sensor (4) is fixed axially along the spindle axis (11) inside a spindle housing (3) of the linear drive, the linear sensor (4) comprising a measuring rod (41) with measuring means (411, 412, 413, 414, 415, 416) for position-dependent, contactless sensing along the spindle axis (11) which sense a load-free end (12) of the spindle (1), said measuring rod (41) being rigidly mounted to the end of the spindle housing (3) at which a stationary support (31; 33) of the spindle housing (3) is present, located opposite the movable, load-bearing end (14) of the spindle (1), so as to sense a length-equivalent measured value for the position of the load-free end (12) of the spindle (1) with respect to the measuring rod (41) that is fixed in relation to the housing.

2. The electromechanical linear drive according to claim 1, **characterised in that**
- a position sensor (42) is mounted to the load-free end (12) of the spindle (1) and
- a central bore (13), extending from the load-free end (12) towards the spindle nut (2) and having a depth that corresponds at least to the maximum travel of the linear drive, is present in the spindle (1) for insertion of the measuring rod (41), so that the linear sensor (4) emits a length-equivalent signal resulting from the different lengths of insertion of the measuring rod (41) in the bore (13).

3. The electromechanical linear drive according to claim 2, **characterised in that** the position sensor (42) is a permanent-magnet ring (421).

4. The electromechanical linear drive according to claim 3, **characterised in that** the measuring rod (41) comprises a series of regularly spaced magnetic field sensors (411) in a non-magnetisable guide tube (43), allowing to determine the absolute position of the spindle (1) based on changes of the electrical resistance of magnetic field sensors (411) located near the position sensor (42).

5. The electromechanical linear drive according to claim 3, **characterised in that** the measuring rod (41) comprises a non-magnetisable guide tube (43) and a wire (412) of magnetostrictive material, fixed axially inside the guide tube (43), wherein a magnetic field differing from the permanent-magnet ring (421) is present cyclically as a result of current pulses in the wire (412), said magnetic field causing sound waves by magnetostriction in the wire (411), and the absolute position of the spindle (1) being determined by way of a propagation time measurement of the sound waves.

6. The electromechanical linear drive according to claim 4 or 5, **characterised in that** the guide tube (43) is made from aluminium.

7. The electromechanical linear drive according to claim 4 or 5, **characterised in that** the guide tube (43) is made from stainless steel.

8. The electromechanical linear drive according to claim 2, **characterised in that** the position sensor (42) is a capacitive coupling electrode (422) in the form of at least one sector of a circular ring.

9. The electromechanical linear drive according to claim 8, **characterised in that** the measuring rod (41) comprises a resistance track (413) and a collector track (414) in a non-metallic guide tube (43), with the coupling electrode (422) being provided for capacitive generation of a current from the resistance track (413) to the collector track (414) that allows to determine the absolute position of the spindle (1) due to the position dependence of said current.

10. The electromechanical linear drive according to claim 2, **characterised in that** the position sensor (42) is a metallic, non-magnetic sleeve (423) inserted in the bore (13) of the load-free end (12) of the spindle (1) and having a length equal to the maximum displacement path of the spindle (1).

11. The electromechanical linear drive according to claim 10, **characterised in that** the measuring rod (41) comprises a two-part coil, wherein a first part (415) of the coil is inserted in the metallic sleeve (423) and a second part (416) always remains outside the sleeve (423) as a reference, and the entire coil (415; 416) is part of a bridge circuit supplemented by two capacitances, the bridge signal of said bridge circuit depending on the depth of insertion of the first part (415) of the coil in the sleeve (423).

12. The electromechanical linear drive according to claim 1, **characterised in that** the measuring rod (41) of the linear sensor (4) is integrated on the side of the stationary support of the spindle housing (3) in front of a pivot mount (31) in the spindle housing (3).

13. The electromechanical linear drive according to claim 1, **characterised in that** the measuring rod (41) of the linear sensor (4) is mounted on the side of the stationary support (33) of the spindle housing (3) such that it can be inserted from outside through an opening in a free face (32) of the spindle housing (3) and later replaced.

## Revendications

1. Entraînement linéaire électromécanique destiné à convertir un mouvement rotatif en mouvement linéaire et comprenant une broche (1) à mouvement linéaire et un écrou de broche (2) supporté, à entraînement par roue dentée, et destiné pour le déplacement linéaire de la broche, ainsi qu'un capteur linéaire (4) destiné à produire une valeur mesurée proportionnelle au déplacement de la broche, **caractérisé en ce que**
ledit capteur linéaire (4) est monté fixe axialement selon l'axe de broche (11) dans un boîtier de broche (3) dudit entraînement, ce capteur linéaire (4) comprenant une jauge de mesure (41) avec des moyens de mesure (411, 412, 413, 414, 415, 416) pour le captage en fonction de position et sans contact selon l'axe de broche (11), ces moyens captant une extrémité non chargée (12) de ladite broche (1), la jauge de mesure (41) étant montée de manière rigide à l'extrémité du boîtier de broche (3) qui présente un support stationnaire (31; 33) du boîtier de broche (3) et se trouve en face de l'extrémité mobile portante (14) de la broche (1), de manière à permettre le captage d'une valeur mesurée, équivalent à une longueur, de la position de l'extrémité non chargée (12) de la broche (1) par rapport à la jauge de mesure (41) qui est montée fixe par rapport audit boîtier.

2. Entraînement linéaire électromécanique selon la revendication 1, **caractérisé**
- **en ce qu'**un capteur de position (42) est monté à l'extrémité non chargée (12) de la broche (1) et
- **en ce que** la broche (1) présente un alésage central (13), qui s'étend de l'extrémité non chargée (12) vers l'écrou de broche (2) et présente une profondeur correspondant au moins à la course maximale dudit entraînement, pour l'insertion de la jauge de mesure (41), de sorte que le capteur linéaire (4) émette un signal équivalent à une longueur, en fonction des différentes longueurs d'insertion de la jauge de mesure (41) dans l'alésage (13).

3. Entraînement linéaire électromécanique selon la revendication 2, **caractérisé en ce que** le capteur de position (42) est un aimant permanent annulaire (421).

4. Entraînement linéaire électromécanique selon la revendication 3, **caractérisé en ce que** la jauge de mesure (41) comprend une série de capteurs de champ magnétique (411) équidistants dans un tube de guidage (43) non magnétisable, permettant de déterminer la position absolue de la broche (1) en fonction des variations de la résistance électrique des capteurs de champ magnétique (411) disposés au voisinage du capteur de position (42).

5. Entraînement linéaire électromécanique selon la revendication 3, **caractérisé en ce que** la jauge de mesure (41) comprend un tube de guidage (43) non magnétisable et un fil (412) de matériau magnétostrictif, serré axialement dans ledit tube de guidage (43), un champ magnétique différent de l'aimant permanent annulaire (421) étant présent cycliquement à cause d'impulsions de courant dans le fil (412), ledit champ magnétique déclenchant des ondes sonores par magnétostriction dans le fil (411), et la position absolue de la broche (1) pouvant être déterminée en mesurant le temps de propagation desdites ondes sonores.

6. Entraînement linéaire électromécanique selon la revendication 4 ou 5, **caractérisé en ce que** le tube de guidage (43) est fabriqué d'aluminium.

7. Entraînement linéaire électromécanique selon la revendication 4 ou 5, **caractérisé en ce que** le tube de guidage (43) est fabriqué d'acier inoxydable.

8. Entraînement linéaire électromécanique selon la revendication 2, **caractérisé en ce que** le capteur de position (42) est une électrode de couplage capacitive (422) sous forme d'au moins un secteur d'un anneau circulaire.

9. Entraînement linéaire électromécanique selon la revendication 8, **caractérisé en ce que** la jauge de mesure (41) comprend une piste résistive (413) et une piste collectrice (414) dans un tube de guidage (43) non métallique, l'électrode de couplage (422) étant prévue pour la génération capacitive d'un courant de la piste résistive (413) vers la piste collectrice (414) qui permet de déterminer la position absolue de la broche (1) en fonction de la dépendance locale dudit courant.

10. Entraînement linéaire électromécanique selon la revendication 2, **caractérisé en ce que** le capteur de position (42) est une douille métallique, non magnétique (423) insérée dans l'alésage (13) de l'extrémité non chargée (12) de la broche (1) et présentant une longueur égale au déplacement maximal de la broche (1).

11. Entraînement linéaire électromécanique selon la revendication 10, **caractérisé en ce que** la jauge de mesure (41) comprend une bobine en deux parties, dont une première partie (415) est insérée dans la douille métallique (423) et la deuxième partie (416) reste toujours en dehors de la douille (423) en tant que référence, et la bobine entière (415; 416) fait parti d'un circuit de pont complémenté par deux capacités, le signal de pont dudit circuit de pont dépendant de la profondeur d'insertion de ladite première partie (415) de la bobine dans la douille (423).

12. Entraînement linéaire électromécanique selon la revendication 1, **caractérisé en ce que** la jauge de mesure (41) du capteur linéaire (4) est intégrée dans le boîtier de broche (3) du côté du support stationnaire du boîtier de broche (3), en amont d'une tête d'articulation (31).

13. Entraînement linéaire électromécanique selon la revendication 1, **caractérisé en ce que** la jauge de mesure (41) du capteur linéaire (4) est montée du côté du support stationnaire (33) du boîtier de broche (3) d'une manière permettant son insertion de l'extérieur à travers une aperture dans une face libre (32) du boîtier de broche (3) et son remplacement ultérieure.
